# EUROPÄISCHE PATENTSCHRIFT

(11) **EP 2 282 875 B1**
(45) Veröffentlichungstag und Bekanntmachung des Hinweises auf die Patenterteilung: **02.11.2011**
(21) Anmeldenummer: 09737960.6
(22) Anmeldetag: 01.04.2009
(51) Int. Cl.: B25J 21/02

(54) **HANDSCHUHANORDNUNG FÜR PRODUKTIONSEINRICHTUNG**
GLOVE ARRANGEMENT FOR PRODUCTION DEVICE
AGENCEMENT DE GANT POUR DISPOSITIF DE PRODUCTION

(30) Priorität: 28.04.2008 DE 102008001411
(43) Veröffentlichungstag der Anmeldung: 16.02.2011
(73) Patentinhaber: Robert Bosch GmbH, 70442 Stuttgart (DE)
(72) Erfinder: Kuehnle, Albrecht, 74589 Satteldorf (DE); Sigwart, Bernd, 74564 Crailsheim (DE); Hertfelder, Thomas, 74586 Frankenhardt (DE); Stadelmann, Florian, 91578 Leutershausen (DE)
(86) Internationale Anmeldenummer: PCT/EP2009/053859
(87) Internationale Veröffentlichungsnummer: WO 2009/132916

(56) Entgegenhaltungen:
- EP-A- 1 265 257
- DE-A1- 4 341 599
- DE-A1-102004 029 813
- FR-A- 2 590 198
- FR-A- 2 642 221

## Beschreibung

### Stand der Technik

Die vorliegende Erfindung betrifft eine Handschuhanordnung für eine Produktionseinrichtung, welche insbesondere einen toxisch kontaminierten Innenraum aufweist.

Handschuhanordnungen werden beispielsweise in der pharmazeutischen Industrie an sogenannten Isolatoren eingesetzt, welche ein gegen die Umgebung steril gehaltenen Innenraum aufweisen, in dem beispielsweise Medikamente in Behälter abgefüllt werden. Um im Innenraum der Produktionseinrichtung arbeiten zu können, werden derartige Handschuhanordnungen verwendet, mit denen eine Bedienperson von außen Zugriff in den Innenraum hat, ohne dabei kontaminiert zu werden.

Vor allem bei toxischen Anwendungen ist eine Abwaschbarkeit des Handschuhs sehr wichtig. Üblicherweise wird während einer Abfüllung o.ä. der gesamte Innenraum der Produktionseinrichtung mit dem toxischen Produkt kontaminiert. Dieses setzt sich dabei auch in den Ecken und Kanten und an schwer zugänglichen Stellen ab. Von daher werden nach einem Abrollvorgang in der Produktionseinrichtung alle Teile, beispielsweise mit Wasser oder Reinigungsflüssigkeit, gesäubert. Hierbei wird auch der Handschuh gesäubert, da man insbesondere aus Kostengründen nicht bei jeder neuen Anwendung einen neuen Handschuh einsetzen möchte. Hierbei hat sich jedoch bei den bekannten Handschuhanordnungen herausgestellt, dass insbesondere im Bereich der Fixierung des Handschuhs an einer Manschette an der Öffnung, durch welche der Handschuh in die Produktionseinrichtung eingeführt wird, häufig noch Kontaminationen verbleiben, da dieser Bereich sehr schwer erreichbar ist. Eine unvollständige Reinigung des sterilen Raumes nach einem Arbeitsvorgang mit toxischen Produkten führt jedoch gegebenenfalls zu einer Kontamination in einem nachfolgenden Arbeitsgang. Auch wird häufig nach der Reinigung der Produktionsraum geöffnet, um beispielsweise neue Behälter o.ä. hinein zu stellen. Wenn die vorhergehende Reinigung nur unvollständig war, kann es dabei auch zu Kontaminationen der Bedienperson bzw. Kreuzkontaminationen kommen.

Aus der EP-A-1265257 ist bereits eine Handschuhanordnung für eine Produktionseinrichtung bekannt. Die Produktionseinrichtung weist eine Trennwand auf, die einen Innenraum von einem unsterilen Außenraum trennt. In der Trennwand ist eine Durchgriffsöffnung vorgesehen. Ein Handschuh ist an der Durchgriffsöffnung angeordnet und umfasst einen Handschuhflansch, der um die Durchgriffsöffnung herum angeordnet ist und über eine Befestigungseinrichtung mit dem Handschuh befestigt ist. Ein weiterer Handschuhflansch ist über einen Außenflansch am ersten Handschuhflansch angeordnet.

Aus der DE-A-4341599 sind bereits ein Verfahren und eine Vorrichtung zum Festlegen eines Ärmelhandschuhs für abgedichtete Räume bekannt. Zwischen einem inneren Flansch und einem Handschuh ist hierbei ein Dichtelement angeordnet.

### Vorteile der Erfindung

Die erfindungsgemäße Handschuhanordnung mit den Merkmalen des Patentanspruchs 1 weist demgegenüber den Vorteil auf, dass sie sehr einfach zu reinigen ist, so dass sichergestellt werden kann, dass nach einer Reinigung keine Kontaminationen an der Handschuhanordnung verbleiben. Hierdurch wird eine erhöhte Arbeits- und Prozesssicherheit erreicht. Dies wird erfindungsgemäß dadurch erreicht, dass die Handschuhanordnung einen Handschuh, einen ersten Handschuhflansch, einen zweiten Handschuhflansch und ein Dichtelement umfasst. Der Handschuh ist zwischen dem ersten Handschuhflansch und dem zweiten Handschuhflansch angeordnet, und das Dichtelement ist zwischen dem Handschuh und dem zweiten Handschuhflansch angeordnet. Hierdurch kann das Dichtelement den Handschuh klemmen und einen definierten Dichtspalt mit verbesserter Zugänglichkeit festlegen.

Zudem drückt das Dichtelement den Handschuh gegen eine Stirnseite des ersten Handschuhflansches, wobei die Stirnseite senkrecht zu einer Mittelachse der Durchtrittsöffnung in der Trennwand angeordnet ist. Hierdurch kann eine einfach aufgebaute und sichere Abdichtung sowie ein besonders kompakter Aufbau erhalten werden.

Das Dichtelement ist besonders bevorzugt eine Flachdichtung, welche sehr einfach und kostengünstig bereitstellbar ist.

Wie aus einer weiteren bevorzugten Ausgestaltung der vorliegenden Erfindung ersichtlich ist, ist das Dichtelement derart angeordnet, dass es bündig mit der Durchgangsöffnung angeordnet ist. Hierdurch ergibt sich eine klar definierte Durchgangsöffnung ohne abgestufte Bereiche.

Um eine möglichst einfache Befestigung des Dichtelements zu ermöglichen, ist das Dichtelement vorzugsweise in einer Ausnehmung im zweiten Handschuhflansch angeordnet. Das Dichtelement kann dabei beispielsweise mittels Kleben in der Ausnehmung fixiert werden.

Für einen möglichst kompakten Aufbau ist ferner vorzugsweise der zweite Handschuhflansch am ersten Handschuhflansch befestigt.

### Zeichnung

Nachfolgend wird ein bevorzugtes Ausführungsbeispiel unter Bezugnahme auf die begleitende Zeichnung im Detail beschrieben. In der Zeichnung ist:
- Figur 1: eine schematische Darstellung einer Produktionseinrichtung mit einer erfindungsgemäßen Handschuhanordnung,
- Figur 2: eine vergrößerte Teilschnittdarstellung der in Figur 1 gezeigten Handschuhanordnung, und
- Figur 3: eine geschnittene, perspektivische Ansicht der erfindungsgemäßen Handschuhanordnung.

### Bevorzugte Ausführungsform der Erfindung

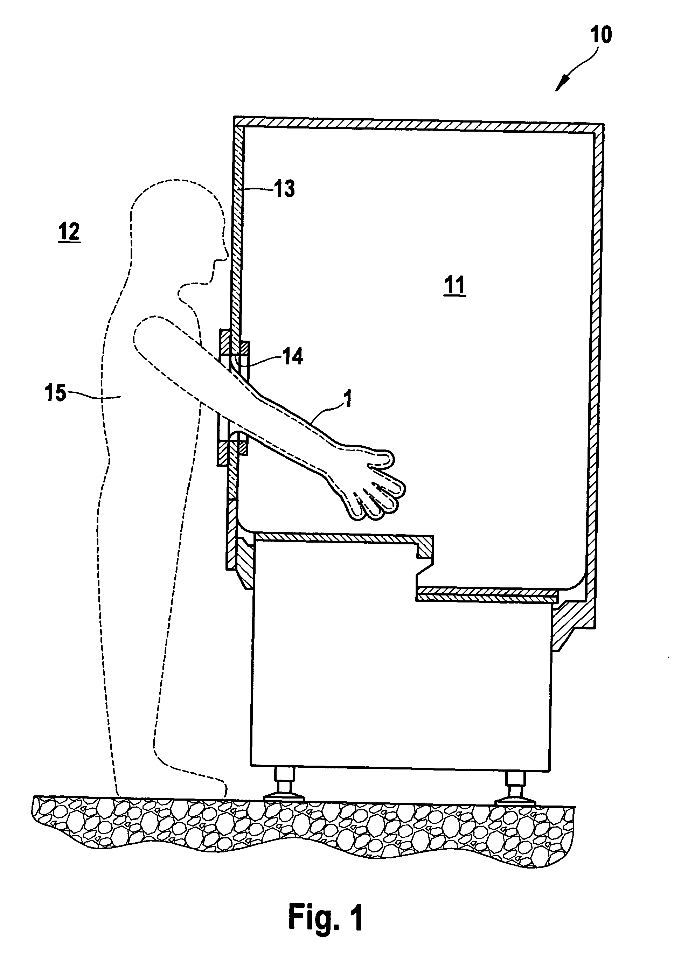

Nachfolgend wird unter Bezugnahme auf die Figuren 1 bis 3 eine Handschuhanordnung 1 gemäß einem Ausführungsbeispiel der Erfindung im Detail beschrieben.

Figur 1 zeigt eine Produktionseinrichtung 10, wie sie beispielsweise im pharmazeutischen Bereich zur Abfüllung von Medikamenten o.ä. verwendet wird. Die Produktionseinrichtung 10 weist einen isolierten Innenraum 11 auf, welcher unter anderem mittels mehrerer Trennwände 13 gegenüber einem Außenraum 12 isoliert ist. In wenigstens einer der Trennwände 13 ist dabei eine Durchgriffsöffnung 14 vorgesehen, an welcher unter anderem eine Handschuhanordnung 1 angeordnet ist. Wie aus Figur 1 ersichtlich ist, kann eine Bedienperson 15 mittels der Handschuhanordnung 1 in den Innenraum 11 hineingreifen und dort gewünschte Tätigkeiten an der Produktionseinrichtung vornehmen, wobei die Handschuhanordnung die Bedienperson 15 davor schützt, dass sie mit im Innenraum 11 befindlichen, gegebenenfalls toxischen, Produkten in Kontakt kommt. Üblicherweise sind hierbei wenigstens zwei Durchgriffsöffnungen 14 in der Trennwand 13 vorgesehen, um mit beiden Armen bzw. Händen in die Produktionseinrichtung 10 greifen zu können. Die Trennwand ist vorzugsweise als Glas oder durchsichtigem Kunststoff hergestellt.

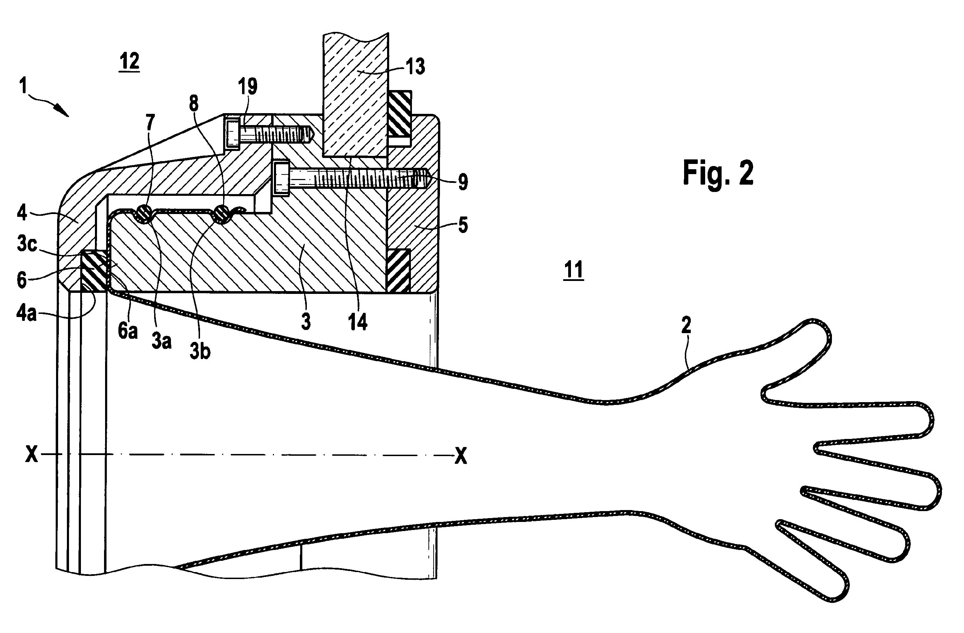

Wie insbesondere aus Figur 2 ersichtlich ist, umfasst die Handschuhanordnung 1 einen Handschuh 2, welcher in bekannter Weise mit einem Armstulpen und einem Fingerbereich ausgebildet ist. Der Handschuh 2 ist aus einem flexiblen Kunststoffmaterial hergestellt und ist an der Durchgriffsöffnung 14 angeordnet. Die Handschuhanordnung 1 umfasst ferner einen ersten Handschuhflansch 3, einen zweiten Handschuhflansch 4 und einen Innenflansch 5. Über eine Schraubverbindung 9 ist der erste Handschuhflansch 3 mit dem Innenflansch 5 verbunden, wobei die Trennwand 13 zwischen dem ersten Handschuhflansch 3 und dem Innenflansch 5 geklemmt ist. Der Innenflansch 5 ist dabei an der Innenseite der Trennwand 13 angeordnet und der erste Handschuhflansch 3 an der Außenwand der Trennwand 13. Der Handschuh 2 ist mittels eines ersten Fixierrings 7 und eines zweiten Fixierrings 8 an dem ersten Handschuhflansch 3 befestigt. Die beiden Fixierringe 7, 8 sind beispielsweise O-Ringe, welche den offenen Endbereich des Handschuhs 2 in entsprechend gebildeten, umlaufenden Nuten 3a, 3b fixieren. Alternativ kann der zweite Fixierring 8 auch in den Handschuh 2 integriert sein und einen Abschluss des Handschuhs bilden.

Wie weiter aus Figur 2 ersichtlich ist, ist der zweite Handschuhflansch 4 an der nach außen gerichteten Seite des ersten Handschuhflansches 3 angeordnet. Der zweite Handschuhflansch überdeckt dabei den ersten Handschuhflansch. Dabei ist der zweite Handschuhflansch 4 mittels mehrerer Schraubverbindungen 19 am ersten Handschuhflansch 3 befestigt. Der zweite Handschuhflansch 4 weist an seiner Innenseite, welche in Richtung des Innenraums 11 der Produktionseinrichtung 10 gerichtet ist, eine umlaufende Ausnehmung 4a auf. In der Ausnehmung 4a ist eine Flachdichtung 6 angeordnet. Die Flachdichtung 6 ist dabei mittels Klebstoff in der Ausnehmung 4a des zweiten Handschuhflansches 4 fixiert. Die Flachdichtung 6 ist, wie aus Figur 2 ersichtlich ist, im Schnitt im Wesentlichen rechteckig ausgebildet und weist eine Dichtfläche 6a auf, welche in Richtung des ersten Handschuhflansches 3 gerichtet ist. Die Dichtfläche 6a ist dabei senkrecht zu einer Mittelachse X-X der Durchgriffsöffnung 14 ausgerichtet. Wie in Figur 2 gezeigt, kommt die Dichtfläche 6a direkt mit einem Teil des Handschuhs 2 in Kontakt und drückt diesen Handschuhbereich gegen eine ebenfalls senkrechte Gegenfläche 3c des ersten Handschuhflansches 3. Wie aus Figur 2 ersichtlich ist, ist die Flachdichtung 6 dabei bündig mit den jeweiligen inneren Umfängen des ersten Handschuhflansches 3 bzw. des Innenflansches 5 ausgerichtet, so dass eine Durchgriffsöffnung ohne störende Stufen o.ä. erhalten wird.

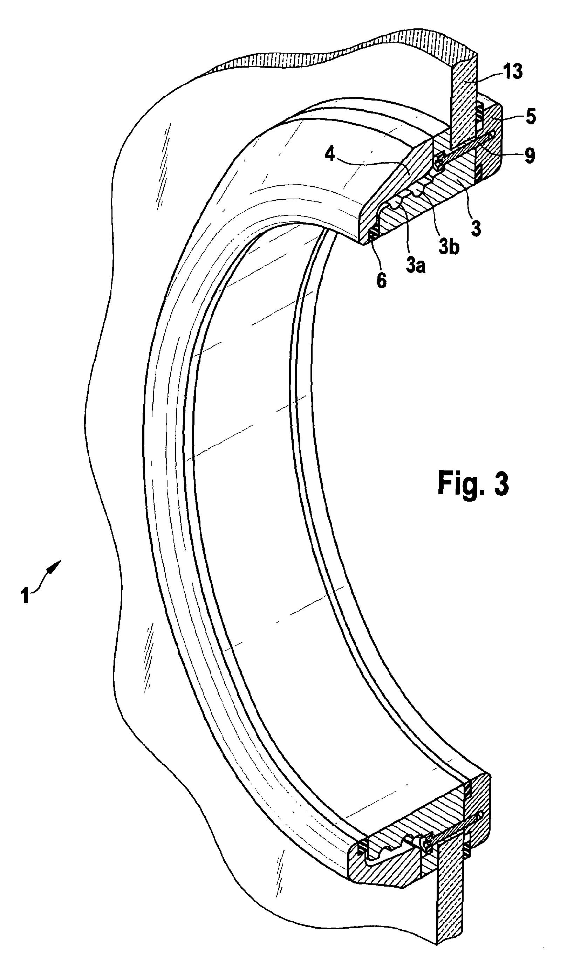

Somit wird erfindungsgemäß eine kompakte Handschuhanordnung 1 bereitgestellt, welche sicherstellt, dass in einem Spalt zwischen dem ersten Handschuhflansch 3 und dem Handschuh 2 kein flüssiges oder pulverförmiges Produkt, welches im Innenraum 11 gehandhabt wird, eindringen kann. Hierdurch ist eine Reinigung des Handschuhs 2 auf einfache und sichere Weise möglich. Es sei angemerkt, dass vorzugsweise eine Kante des ersten Handschuhflansches 3, an welcher die Armstulpe des Handschuhs 2 umgelenkt wird, mit einem Radius versehen ist, um ein unbeabsichtigtes Einreißen des Handschuhs zu vermeiden. Die Flachdichtung 6 übernimmt somit eine Doppelfunktion eines Klemmens und eines Abdichtens am Handschuh 2. Ferner ist es durch das Vorsehen des zweiten Handschuhflansches 4 möglich, dass der zweite Handschuhflansch, wie aus Figur 3 ersichtlich ist, eine Abdeckfunktion für die anderen Bauteile der Handschuhanordnung 1 übernimmt, so dass die Handschuhanordnung 1 auch von dem Außenraum aus ein kompaktes und leicht zu reinigendes Bauteil ist. Insbesondere um Verletzungen zu vermeiden, sind die zur Außenseite gerichteten Kanten des zweiten Handschuhflansches 4 abgerundet.

## Patentansprüche

1. Handschuhanordnung für eine Produktionseinrichtung (10), wobei die Produktionseinrichtung (10) eine Trennwand (13) aufweist, die einen vorzugsweise steril gehaltenen Innenraum (11) von einem unsterilen Außenraum (12) trennt und in der Trennwand (13) eine Durchgriffsöffnung (14) vorgesehen ist, umfassend:
- einen Handschuh (2), welcher an der Durchgriffsöffnung (14) angeordnet ist und in welchen vom Außenraum (12) aus hineingegriffen werden kann, um durch die Durchgriffsöffnung (14) hindurchgesteckt zu werden,
- einen ersten Handschuhflansch (3), welcher an der Außenraumseite um die Durchgriffsöffnung (14) herum angeordnet ist,
- eine Befestigungseinrichtung (7, 8), welche den Handschuh (2) am ersten Handschuhflansch (3) befestigt,
- einen zweiten Handschuhflansch (4), welcher am ersten Handschuhflansch (3) angeordnet ist, und
- ein Dichtelement (6), welches umlaufend zwischen dem zweiten Handschuhflansch (4) und den Handschuh (2) angeordnet ist und den Handschuh (2) gegen eine Stirnseite (3c) des ersten Handschuhflansches (3) drückt, wobei die Stirnseite (3c) senkrecht zu einer Mittelachse (X-X) der Durchgriffsöffnung (14) angeordnet ist.

2. Handschuhanordnung nach einem der vorhergehenden Ansprüche, **dadurch gekennzeichnet, dass** das Dichtelement (6) eine umlaufend geschlossene Flachdichtung ist.

3. Handschuhanordnung nach einem der vorhergehenden Ansprüche, **dadurch gekennzeichnet, dass** das Dichtelement (6) bündig mit einem inneren Umfangsbereich des ersten Handschuhflansches (3) angeordnet ist.

4. Handschuhanordnung nach einem der vorhergehenden Ansprüche, **dadurch gekennzeichnet, dass** das Dichtelement (6) in einer Ausnehmung (4a) des zweiten Handschuhflansches (4) angeordnet ist.

5. Handschuhanordnung nach einem der vorhergehenden Ansprüche, **dadurch gekennzeichnet, dass** der zweite Handschuhflansch (4) am ersten Handschuhflansch (3) befestigt ist.

6. Produktionseinrichtung mit einem toxisch kontaminierten Innenraum (11), umfassend eine Handschuhanordnung (1) nach einem der vorhergehenden Ansprüche.

## Claims

1. Glove arrangement for a production device (10), wherein the production device (10) has a partition wall (13) which separates an inner space (11), which is preferably kept sterile, from a non-sterile outer space (12), and a through-passage opening (14) is provided in the partition wall (13), comprising:
- a glove (2), which is arranged at the through-passage opening (14) and which can be reached into from the outer space (12) in order to be pushed through the through-passage opening (14),
- a first glove flange (3), which is arranged around the through-passage opening (14) on the outer-space side,
- a fastening device (7, 8), which fastens the glove (2) to the first glove flange (3),
- a second glove flange (4), which is arranged on the first glove flange (3), and
- a sealing element (6), which is arranged in a circumferential manner between the second glove flange (4) and the glove (2) and presses the glove (2) against an end side (3c) of the first glove flange (3), wherein the end side (3c) is arranged perpendicularly to a centre axis (X-X) of the through-passage opening (14).

2. Glove arrangement according to Claim 1, **characterized in that** the sealing element (6) is a circumferentially closed flat seal.

3. Glove arrangement according to either of the preceding claims, **characterized in that** the sealing element (6) is arranged flush with an inner circumferential region of the first glove flange (3).

4. Glove arrangement according to one of the preceding claims, **characterized in that** the sealing element (6) is arranged in a recess (4a) in the second glove flange (4).

5. Glove arrangement according to one of the preceding claims, **characterized in that** the second glove flange (4) is fastened to the first glove flange (3).

6. Production device having a toxically contaminated inner space (11), comprising a glove arrangement (1) according to one of the preceding claims.

## Revendications

1. Agencement de gant pour dispositif de production (10), dans lequel le dispositif de production (10) présente une paroi de séparation (13) qui sépare un espace interne (11) maintenu de préférence stérile d'un espace externe non stérile (12), et dans lequel une ouverture d'accès (14) est prévue dans la paroi de séparation (13), comprenant :
- un gant (2) qui est disposé au niveau de l'ouverture d'accès (14) et qui peut être enfilé à partir de l'espace externe (12) pour être enfoncé à travers l'ouverture d'accès (14),
- une première bride de gant (3) qui est disposée du côté de l'espace externe tout autour de l'ouverture d'accès (14),
- un dispositif de fixation (7, 8) qui fixe le gant (2) à la première bride de gant (3),
- une deuxième bride de gant (4) qui est disposée sur la première bride de gant (3), et
- un élément d'étanchéité (6) qui est disposé sur la périphérie entre la deuxième bride de gant (4) et le gant (2), et qui presse le gant (2) contre un côté frontal (3c) de la première bride de gant (3), le côté frontal (3c) étant disposé perpendiculairement à un axe médian (X-X) de l'ouverture d'accès (14).

2. Agencement de gant selon la revendication 1, **caractérisé en ce que** l'élément d'étanchéité (6) est une garniture d'étanchéité plate fermée sur le pourtour.

3. Agencement de gant selon l'une quelconque des revendications précédentes, **caractérisé en ce que** l'élément d'étanchéité (6) est disposé en affleurement avec une région périphérique interne de la première bride de gant (3).

4. Agencement de gant selon l'une quelconque des revendications précédentes, **caractérisé en ce que** l'élément d'étanchéité (6) est disposé dans un évidement (4a) de la deuxième bride de gant (4).

5. Agencement de gant selon l'une quelconque des revendications précédentes, **caractérisé en ce que** la deuxième bride de gant (4) est fixée sur la première bride de gant (3).

6. Dispositif de production comprenant un espace interne (11) contaminé toxique, comprenant un agencement de gant (1) selon l'une quelconque des revendications précédentes.
